# EUROPEAN PATENT SPECIFICATION

(11) **EP 0 627 352 B1**
(45) Date of publication and mention of the grant of the patent: **21.04.1999**
(21) Application number: 94303715.0
(22) Date of filing: 24.05.1994
(51) Int. Cl.: B62D 5/04, F16D 7/02

(54) **Electric power steering device**
Elektrische Hilfskraftlenkvorrichtung
Dispositif de direction assistée électrique

(30) Priority: 01.06.1993 JP 29057/93 U; 13.12.1993 JP 66258/93 U
(43) Date of publication of application: 07.12.1994
(73) Proprietor: NSK LTD, Shinagawa-ku, Tokyo (JP)
(72) Inventor: Eda, Hiroshi, Maebashi-shi, Gunma-ken (JP); Shiono, Hironobu, Maebashi-shi, Gunma-ken (JP); Chikuma, Isamu, Maebashi-shi, Gunma-ken (JP)
(74) Representative: Abbie, Andrew Kenneth

(56) References cited:
- EP-A- 0 535 422
- DE-C- 534 161
- US-A- 3 091 951

## Description

The present invention relates to an electric power steering device, and more particularly, but not exclusively, to an electric power steering device for a vehicle.

An electric power steering device for a vehicle is known in which the output speed of an electric motor, providing auxiliary steering torque, is reduced by means of gears in a power transmission mechanism, thereby transmitting an appropriate torque at appropriate speed to an output shaft of the steering device. While such a device is in use, an abrupt force received by the wheels from the road may result in an impact load acting against the output of the electric motor, and such an impact load may cause damage to the electric motor or to the power transmission mechanism.

For reducing or avoiding such an impact load, there have conventionally been provided, for example:
1) a slidable friction mechanism provided on the output shaft of the steering device and serving as a torque limiter causing a sliding motion under an excessive torque (Utility Model Application JP-A-475506); or
2) a magnetic clutch serving as a torque limiter, provided on a rotary shaft of the electric motor.

However, in such conventional electric power steering devices;
in the configuration mentioned at 1) above, because the output of the electric motor is transmitted to the output shaft ordinarily through a reduction (torque increasing) gear mechanism, the frictional force in the slidable mechanism attached to the output shaft has to be rather large in order to transmit increased torque. For this reason it is associated with the drawback of requiring a strict load control in order to obtain a constant frictional force; and
in the configuration mentioned at 2) above, the magnetic clutch requires a constant supply of electric power. For this reason it is associated with drawbacks in terms of energy saving, and the solenoid of the magnetic clutch has to be made rather large if the rated output of the electric motor increases.

EP-A-0535422 discloses an electric power steering device comprising:
a housing;
a motor with a rotary shaft, mounted to said housing;
an output shaft connected to a wheel steering mechanism;
a reduction gear mechanism connected to said output shaft, and provided with a transmission shaft, said mechanism being adapted to effect power transmission from said transmission shaft to said output shaft; and
power transmission means disposed between the rotary shaft of said motor and said reduction gear mechanism;
said power transmission means including a friction plate which is incapable of rotation relative to one of said rotary shaft and said transmission shaft but axially moveable relative thereto, and a pressure member for pressing said friction plate against a receiving means for receiving a pressing force from said pressure member, which receiving means is incapable of rotation relative to the other of said rotary shaft and said transmission shaft;
power transmission being achieved, in use, by means of a frictional force generated between said friction plate and said receiving means.

One object of the present invention is to provide an electric power steering device capable of alleviating damage to the electric motor or to the power transmission system caused by impact loads, and which has a simple configuration.

Accordingly, the invention provides an electric power steering device as described in the last but one preceding paragraph, characterised in that said frictional force is selected so as to be larger than the drive normally transmitted from said motor but smaller than a predetermined value of impact load generated between said output shaft and said motor; and

said receiving means includes a friction plate housing surrounding said friction plate and said pressure member such that the pressing force from said pressure member is not transmitted outwardly from said friction plate housing.

In order that the invention may be well understood, an embodiment thereof, which is given by way of example only, will now be described with reference to the accompanying drawings, in which:
Fig. 1 is a partially sectioned side view of an electric power steering device; and
Fig. 2 is a sectional view of the device shown in Fig. 1 taken on plane II-II.

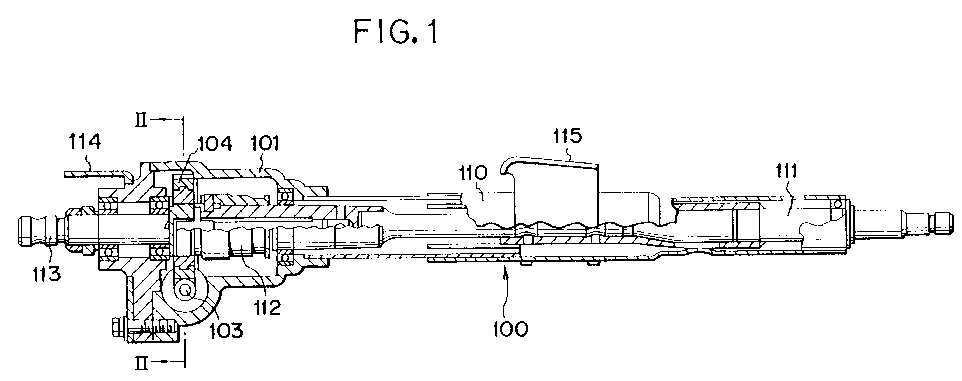

Referring to Fig. 1, an electric power steering device 100 includes a housing 101 and a tube 110 extending therefrom. The housing 101 and the tube 110 are respectively fixed to a vehicle body (not shown) by brackets 114 and 115. Inside the tube 110 extends an input shaft 111, which is connected at an end thereof to a steering wheel (not shown) and is rotatably supported with respect to the tube 110. The other end of the input shaft 111 is connected to a torque detecting device 112.

The torque detecting device 112 is also connected to an output shaft 113 which extends in the housing 101 and is rotatably supported. The output shaft 113 is connected to a steering mechanism (not shown) and serves to transmit torque to the steering mechanism for steering the wheels of a vehicle. The torque detecting device 112 is provided to detect the relative torque between the input shaft 111 and the output shaft 113 for controlling auxiliary steering torque, but the details of such a device will not be explained as the configuration thereof is already well known.

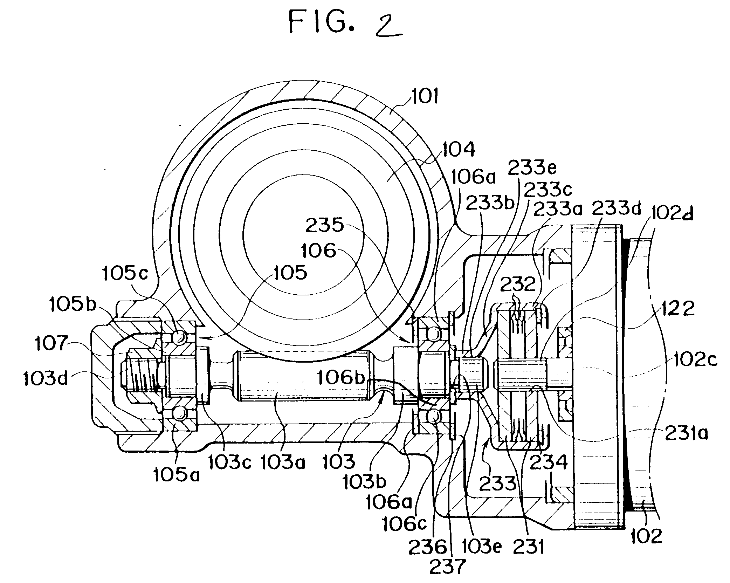

The electric power steering device 100 is provided with a first and a second transmission shaft 130 and 103. In the vicinity of the torque detecting device 112, the output shaft 113 is coaxial with a worm wheel 104, engaging with a worm gear portion, or worm, 103a (cf. Fig.2) of the second transmission shaft 103 extending perpendicularly to the plane of Fig. 1. The second transmission shaft 103 is connected so as to be rotatable with the rotary shaft (not shown) of a motor 102 (cf. Fig.2).

In use, the input shaft 111 rotates to transmit torque from the steering wheel (not shown) to the output shaft 113 through the torque detecting device 112. The output shaft 113 transmits the steering torque to the steering mechanism (not shown). A value corresponding to the torque detected by the torque detecting device 112 is supplied to a discrimination circuit (not shown) and is compared with a predetermined value therein. If this corresponding value exceeds the predetermined value, auxiliary steering torque is required, and a driving command is released to drive the motor 102. The motor 102, activated by the driving command, rotates the second transmission shaft 103, thereby transmitting torque through the worm wheel 104.

When the value corresponding to the torque detected by the torque detecting device 112 is lower than the predetermined value, the auxiliary steering torque is not required so that the motor 102 is not activated.

Referring now to Fig. 2, an electric motor 102 is mounted at the right-hand end (as viewed in Fig. 2) of a housing 101, and a rotary shaft 102c of the electric motor 102 is rotatably supported by a bearing 122. Two annular friction plates 231 are mounted around the rotary shaft 102c which has splines 102d formed adjacent its free end. The friction plates 231 have centrally disposed apertures and are provided with splines 231a disposed about the periphery of each of these apertures which correspond to and engage with the splines 102d of the rotary shaft 102c, whereby the friction plates 231 are rendered incapable of rotation relative to the rotary shaft 102 but axially moveable relative thereto.

Surrounding the friction plates 231 is a friction plate housing 233 which is hollow and comprises a large diameter portion 233a and a small diameter portion 233b interconnected by a connecting portion 233c which is part frustoconical. The internal diameter of the large diameter portion 233a is selected so as to be slightly larger than the external diameter of the friction plates 231, in order not to hinder axial movement of the plates 231.

Two back to back disk springs 232 are disposed about the rotary shaft 102c between and in contact with the two friction plates 231. A circumferentially extending groove 233d is formed in the internal periphery of the friction plate housing 233, in the vicinity of the external periphery of the axially outer face of the friction plate 231 closest to the electric motor. Inside this groove 233d is a pressure plate 234, which is mounted therein by an end of the friction plate housing. The pressure plate 234 and a radially extending flange portion of the connecting portion 233c support the friction plates 231 therebetween so as to maintain the distance between these plates 231 at a predetermined value, whereby a pressing, or biasing, force of the disk springs 232 is set at a predetermined reference value or higher. The friction plate housing 233 and the pressure plate 234 constitute a receiving means for receiving the biasing force from the disk springs 232, while the disk springs 232 constitute pressure members. The friction plates 231, the receiving means 233, 234 and the pressure members 232 together constitute a power transmission means.

A transmission shaft, or reduction gear mechanism input shaft, 103, coaxial with the rotary shaft 102c of the electric motor 102, is rotatably supported by first and second bearings 105, 106 disposed in the housing 101. Adjacent the end of the transmission shaft 103 closest to the electric motor 102 are formed splines 103e which engage with corresponding splines 233e formed on the internal periphery of the small diameter portion 233b of the friction plate housing 233, whereby the friction plate housing 233 is mounted to the transmission shaft 103 so as to be incapable of rotation relative thereto but axially movable relative thereto. The free end of the small diameter portion 233b of the friction plate housing 233 abuts an intermediate seating member 237, thereby being prevented from movement in the axial direction away from the motor 102 (to the left in Figure 2). The bearings 105, 106 respectively include outer rings 105a, 106a, inner rings 105b, 106b and pluralities of balls 105c, 106c supported between the respective inner and outer rings. At the side of the second bearing 106, furthest from the electric motor 102 an intermediate seating member 235 is provided between a stepped portion of the housing 101 and the outer ring 106a of the second bearing 106. Also, at the other side, closest to the electric motor 102, of the second bearing 106, a snap ring 236 is inserted in a peripheral groove in the housing 101, whereby the second bearing 106, being sandwiched between the intermediate seating member 235 and the snap ring 236, is prevented from axial movement.

The transmission shaft 103 is provided with a flange portion 103c in contact with the axially inner side of the first bearing 105, a flange portion 103b in contact with the second bearing 106, and a worm, or worm gear portion, 103a disposed between these flange portions 103b, 103c and meshing with a worm wheel 104. At the end of the transmission shaft 103 furthest from the motor 102 is a screw thread 103d which engages with a nut 107, and the inner ring 105b of the first bearing 105 is supported between the flange portion 103c and the nut 107. The worm wheel 104 and the worm 103a constitute a reduction gear mechanism.

In normal operation, the torque generated by the motor 102 is transmitted through the rotary shaft 102c to the friction plates 231. The two friction plates 231 are biased apart by the disk springs 232 towards the pressure plate 234 and the connecting portion 233c of the friction plate housing 233 respectively. Consequently, each friction plate 231 is compressed between a respective disk spring 232 and the pressure plate 234 or the friction plate housing 233, thereby generating a frictional force corresponding to the biasing force. As the biasing force of the disk springs 232 and the distance between the friction plates 231 are selected so that the frictional force is larger than the torque generated by the motor 102 in normal operation, the friction plates 231 and the friction plate housing 233 rotate integrally in normal operation. The torque transmitted to the friction plate housing 233 rotates the worm wheel 104 through the worm 103a of the transmission shaft 103, and is further transmitted to a wheel steering mechanism (not shown).

However, a wheel may receive an impact force caused by road surface irregularities. In such a case, in a conventional electric power steering device, an impact load may be transmitted to the motor through the power transmission system, thereby counteracting the output of the motor. Such counteraction could generate an excessively large stress in the power transmission system, eventually leading to the destruction of component parts.

However, in the electric power steering device 100 of Fig. 2, because the biasing force of the disk springs 232 is selected so that the frictional force generated between the respective friction plates 231 and the pressure plate 234 and friction plate housing 233 is smaller than a pre-determined value of the impact load, a relative sliding motion occurs between the respective friction plates 231 and the pressing plate 234 and friction plate housing 233 in response to an excessive impact load. The damage to the power transmission system can be prevented, because an excessive impact load can be almost fully absorbed by the relative sliding motion.

Also, in the electric power steering device 100 of Fig. 2, the biasing force transmitted to the friction plates 231 from the disk springs 232 is received entirely by the friction plate housing 233, that is, this biasing force is not transmitted outwardly therefrom. Consequently, no resultant axial force is transmitted to either the bearing 122 which supports the rotary shaft 102a of the electric motor 102 or to the first and second bearings 105, 106 which support the transmission shaft 103 and the rolling resistance of these bearings 122, 105, 106 remains low, so that the returning ability of the steering wheel is improved. Also, the electric power steering device 100 of Fig. 2 employing two friction plates 231 can improve the power transmitting ability or can enable friction plates 231 of reduced diameter to be used compared with a device employing only one friction plate. Also, the presence of two friction plates 231 allows transmission of a sufficiently high torque, even if the respective splines of each friction plate 231 can only transmit a limited torque.

The embodiment of Figure 2 is subject to suitable modifications and variations. For example, only one friction plate 231 may be employed. Also, although the friction plate housing 233 is axially moveable with respect to the transmission shaft 103 in the embodiment of Fig. 2, alternatively the friction plate housing 233 and the transmission shaft 103 may be interconnected, for example, with a radially penetrating pin.

In the electric power steering device of Fig. 2, the power transmission means (231, 232, 233, 234) is disposed between the rotary shaft 102c of the motor 102 and the reduction gear mechanism 103a, 104 so that power transmission is achieved by means of a relatively small frictional force generated between the respective friction plates 231 and the pressure plate 234 and friction plate housing 233 before the output torque of the motor 102 is amplified by the reduction gear mechanism 103a 104. Consequently the power transmission means 231, 232, 233, 234 can be made simpler and more compact, because it is not necessary to increase the biasing force transmitted by the pressure members 232 nor to increase the area of the frictional plates 231.

## Claims

1. An electric power steering device (100) comprising:
a housing (101);
a motor (102) with a rotary shaft (102c), mounted to said housing (101);
an output shaft (113) connected to a wheel steering mechanism;
a reduction gear mechanism (103a, 104) connected to said output shaft (113), and provided with a transmission shaft (103), said mechanism being adapted to effect power transmission from said transmission shaft (103) to said output shaft (113); and
power transmission means (231, 232, 233, 234) disposed between the rotary shaft (102c) of said motor (102) and said reduction gear mechanism (103a, 104);
said power transmission means including a friction plate (231) which is incapable of rotation relative to one of said rotary shaft (102c) and said transmission shaft (103) but axially moveable relative thereto, and a pressure member (232) for pressing said friction plate (231) against a receiving means (233, 234) for receiving a pressing force from said pressure member, which receiving means is incapable of rotation relative to the other of said rotary shaft (102c) and said transmission shaft (103);
power transmission being achieved, in use, by means of a frictional force generated between said friction plate and said receiving means (233, 234);
characterised in that said frictional force is selected so as to be larger than the drive normally transmitted from said motor (102) but smaller than a predetermined value of impact load generated between said output shaft (113) and said motor (102); and
said receiving means (233, 234) includes a friction plate housing (233) surrounding said friction plate (231) and said pressure member (232) such that the pressing force from said pressure member (232) is not transmitted outwardly from said friction plate housing (233).

## Patentansprüche

1. Elektrische Servolenkvorrichtung, die umfaßt:
ein Gehäuse (101);
einen Motor (102) mit einer Drehwelle (102c), der an dem Gehäuse (101) angebracht ist;
eine Ausgangswelle (113), die mit einem Radlenkmechanismus verbunden ist;
einen Untersetzungsgetriebemechanismus (103a, 104), der mit der Ausgangswelle (113) verbunden und mit einer Übertragungswelle (103) versehen ist, wobei der Mechanismus Kraftübertragung von der Übertragungswelle (103) auf die Ausgangswelle (113) bewirkt; und
eine Kraftübertragungseinrichtung (231, 232, 233, 234), die zwischen der Drehwelle (102c) des Motors (102) und dem Untersetzungsgetriebemechanismus (103a, 104) angeordnet ist;
wobei die Kraftübertragungseinrichtung eine Reibplatte (231) enthält, die keine Drehung in bezug entweder auf die Drehwelle (102c) oder die Übertragungswelle (103) ausführen kann, in bezug auf diese jedoch axial beweglich ist, sowie ein Druckelement (232), das die Reibplatte (231) an eine Aufnahmeeinrichtung (233, 234) drückt, die eine Druckkraft von dem Druckelement aufnimmt, wobei die Aufnahmeeinrichtung keine Drehung in bezug auf die andere der Wellen, d.h. entweder die Drehwelle (102c) oder die Übertragungswelle (103), ausführen kann;
wobei die Kraftübertragung in Funktion durch eine Reibkraft bewirkt wird, die zwischen der Reibplatte und der Aufnahmeeinrichtung (233, 234) erzeugt wird.
**dadurch gekennzeichnet,** daß die Reibkraft so gewählt wird, daß sie größer ist als der Antrieb, der normalerweise von dem Motor (102) übertragen wird, jedoch kleiner als ein vorgegebener Wert der Stoßbeanspruchung, der zwischen der Ausgangswelle (113) und dem Motor (102) erzeugt wird; und
die Aufnahmeeinrichtung (233, 234) ein Reibplattengehäuse (233) enthält, das die Reibplatte (231) und das Druckelement (232) so umschließt, daß die Druckkraft von dem Druckelement (232) nicht aus dem Reibplattengehäuse (233) heraus übertragen wird.

## Revendications

1. Dispositif de direction assistée électrique (100) comprenant :
un boîtier (101);
un moteur (102) comportant un arbre rotatif (102c) monté sur ledit boîtier (101);
un arbre de sortie (113) raccordé à un mécanisme de braquage des roues;
un mécanisme d'engrenage réducteur (103a, 104) raccordé audit arbre de sortie (113) et pourvu d'un arbre de transmission (103), ledit mécanisme étant adapté pour exécuter une transmission de puissance dudit arbre de transmission (103) audit arbre de sortie (113), et
des moyens de transmission de puissance (231, 232, 233, 234) disposés entre l'arbre rotatif (102c) dudit moteur (102) et ledit mécanisme d'engrenage réducteur (103a, 104);
lesdits moyens de transmission de puissance comprenant une plaque de friction (231), qui ne peut pas tourner par rapport à l'un dudit arbre rotatif (102c) et dudit arbre de transmission (103), mais est déplaçable axialement par rapport à cet arbre, et un élément de pression (232) servant à repousser ladite plaque de friction (231) contre des moyens de réception (233,234) pour recevoir une force de pression appliquée par ledit élément de pression, lesquels moyens de réception ne peuvent pas tourner par rapport à l'autre dudit arbre rotatif (102c) et dudit arbre de transmission (103);
la transmission de puissance étant obtenue, en fonctionnement, au moyen d'une force de frottement produite entre ladite plaque de friction et lesdits moyens de réception (233, 234);
caractérisé en ce que ladite force de frottement est choisie de manière à être supérieure à l'entraînement réalisé normalement par ledit moteur (102), mais inférieure à une valeur prédéterminée d'une charge d'impact produite entre ledit arbre de sortie (113) et ledit moteur (102); et
que lesdits moyens de réception (233, 234) comprennent un boîtier (233) pour la plaque de friction, qui entoure ladite plaque de friction (231) et ledit élément de pression (232) de sorte que la force de pression délivrée par ledit élément de pression (232) n'est pas transmise à l'extérieur à partir dudit boîtier (233) logeant la plaque de friction.
